# EUROPÄISCHE PATENTSCHRIFT

(11) **EP 0 856 273 B1**
(45) Veröffentlichungstag und Bekanntmachung des Hinweises auf die Patenterteilung: **01.03.2000**
(21) Anmeldenummer: 97122244.3
(22) Anmeldetag: 17.12.1997
(51) Int. Cl.: A47J 43/08, A47J 43/044

(54) **Deckel zum Verschliessen eines Arbeitsbehälters**
Lid for closing a working bowl
Couvercle pour fermer un bol de travail

(30) Priorität: 03.02.1997 DE 19703871
(43) Veröffentlichungstag der Anmeldung: 05.08.1998
(73) Patentinhaber: Braun GmbH, Kronberg (DE)
(72) Erfinder: Penaranda, Mariano, 08005 Barcelona (ES); Agell, Josep, 08950 Esplugues de Llobregat, Barcelona (ES); Gili, Sergi, 08820 El Prat de Llobregat, Barcelona (ES); Roman, Jose Luis, 08031 Barcelona (ES); Hernandez, Alejandro, 43710 Santa Oliva, (Tarragona) (ES)

(56) Entgegenhaltungen:
- EP-A- 0 071 496
- EP-A- 0 257 732
- EP-A- 0 529 287
- WO-A-96/10943
- WO-A-96/22720

## Beschreibung

Die Erfindung betrifft einen Arbeitsbehälter mit einem diesen verschließenden Deckel, an dessen Boden an einer Führungseinrichtung ein zum Bearbeiten von Nahrungsmitteln drehbares Arbeitswerkzeug ausgebildet ist, das an seinem dem Deckel näheren Bereich ein erstes Kupplungselement aufweist, das beim Verschließen des Arbeitsbehälters durch den Deckel mit einem zweiten Kupplungselement einer Abtriebswelle kuppelbar ist, von einer Antriebseinrichtung, antreibbar ist und die über eine im Deckel ausgebildete Bohrung diesen nach oben durchdringt.

Ein derartiger Arbeitsbehälter und Deckel ist bereits aus der DE-A-41 28 456 bekannt. Der den Arbeitsbehälter verschließende Deckel weist eine Abtriebswelle auf, an deren dem Arbeitsbehälter zugewandten Ende ein zweites Kupplungselement ausgebildet ist, das beim Verschließen des Deckels mit dem am Arbeitswerkzeug ausgebildeten ersten Kupplungselement in Zahneingriff gelangt. Die Abtriebswelle ist über ein Lagerelement im Deckel gelagert und zentriert.

Bei der Reinigung eines derartigen Deckels von Hand oder in einer Geschirrspülmaschine können Speisereste in die zwischen Abtriebswelle und Lagerelement ausgebildete Gleitlagerung gelangen, die dann kaum wieder entfernbar sind und die zum Verschleiß der Lageranordnung und aufgrund der damit verbundenen höheren Lagerreibung zu erhöhtem Kraftaufwand der Antriebseinheit und zu erhöhter Geräuschentwicklung im Betrieb führen können. Des weiteren können im Betrieb aus der Lageranordnung alte Speisereste in den Arbeitsbehälter gelangen, wenn nicht aufwendige Dichtungselemente oder sehr eng tolerierte Passungen für die Lagerung verwendet werden.

Gleiches Problem tritt auch bei dem Arbeitsbehälter nach der EP-A-520 287 auf, da auch hier die Abtriebswelle in einem Gleitlager gelagert ist. Zwar durchdringt die Abtriebswelle eine zweite Bohrung im Deckel, diese zweite Bohrung dient aber nicht als Lageranordnung für die Abtriebswelle, sondern sie dient als Labyrinthdichtung, damit eben gerade nicht Nahrungsmittelrückstände in die obere Gleitlageranordnung hineingelangen. Gelangen dennoch von oben her Nahrungsmittelreste in die Gleitlageranordnung, so können diese, wie bereits oben beschrieben, hieraus praktisch nicht entfernt werden.

Aufgabe der Erfindung ist es daher, einen Arbeitsbehälter mit einem Deckel zu schaffen, der leicht reinigbar ist.

Diese Aufgabe wird erfindungsgemäß durch die kennzeichnenden Merkmale des Patentanspruchs 1 gelöst. Dadurch, daß zwischen der Abtriebswelle und der Bohrung im Deckel ein ausreichend großes Lüftspiel ausgebildet ist, können während der Reinigung des Deckels auch Speisereste aus diesem Spalt entfernt werden, da der Spalt so breit bemessen ist, daß Wasser den Spalt problemlos passieren kann. Insbesondere beim Reinigen in einer Geschirrspülmaschine kann die Bohrung durch ständiges Einfließen von Wasser selbsttätig gereinigt werden. Ein so gereinigter Deckel ist dann frei von Nahrungsmittelrückständen und kann vor Gebrauch, insbesondere im Bereich der von der Abtriebswelle durchdrungenen Bohrung leicht und schnell abtrocknen. Aufgrund der berührungsfreien Lagerung der Abtriebswelle gegenüber feststehenden Teilen im Deckel werden in diesem Bereich Lagergeräusche gänzlich vermieden.

Damit im Betrieb das aus Deckel, Arbeitsbehälter und Arbeitswerkzeug gebildete Zerkleinerungsgerät möglichst schwingungsfrei arbeitet, sind die Merkmale des Patentanspruchs 2 vorgesehen. Erst dann, wenn nämlich der Deckel ordnungsgemäß auf dem Arbeitsbehälter und die Antriebseinrichtung auf dem Deckel aufgesetzt ist, hat sich die Abtriebswelle über ihr zweites und drittes Kupplungselement auf dem ersten und vierten Kupplungselement zentriert und die Abtriebswelle verläuft im wesentlichen mit Abstand und konzentrisch zur Bohrung des Deckels. Hierdurch entsteht aufgrund der Abmessungen zwischen Bohrung und Abtriebswelle ein Ringspalt (Anspruch 3).

Zwar wird vor Aufsetzen der Antriebseinrichtung auf dem Deckel die Einheit aus Abtriebswelle und Arbeitswerkzeug lediglich einseitig über den am Boden des Arbeitsbehälters hervorstehenden Lagerzapfen zentriert, diese Lagerung reicht aber aus, solange das Arbeitswerkzeug nicht in Drehung versetzt wird. Die an den Enden von Arbeitswerkzeug und Abtriebswelle vorgenommene Lagerung läßt auch einen geringen Achsversatz von Längsachse Lagerzapfen und Längsachse Antriebseinrichtung zu, ohne daß es gleich zu einem Verklemmen der Abtriebswelle und des Arbeitswerkzeugs kommt.

Durch die Merkmale des Anspruchs 4 durchdringt die Abtriebswelle den Deckel direkt nach außen, ohne daß ein Zwischengetriebe vorgesehen ist. Bei einem Zwischengetriebe allerdings müßte die Abtriebswelle frei im Deckel gelagert sein und müßte dann über eine Kugelverzahnung oder über eine Art Kardangelenk drehbar mit einem Getriebe verbunden sein, dessen Ausgang aus dem Deckel über eine weitere Abtriebswelle erfolgen müßte.

Durch die Merkmale des Patentanspruchs 5 wird erreicht, daß die sich frei in der Bohrung des Deckel bewegende Abtriebswelle nicht aus der Bohrung herausgleitet, also daß sie über die Absätze ein Anschlag mit den die Bohrung begrenzenden Wänden bildet.

Durch die Merkmale des Patentanspruchs 6 wird eine einfache Montage und Befestigung der Abtriebswelle an dem Deckel erreicht, indem von beiden Seiten der Bohrung her je ein Wellenabschnitt eingesetzt wird, die dann fest ineinandergreifen und so eine einteilige Antriebswelle am Deckel bilden. Dabei greift dann ein Zapfen des einen Wellenabschnitts in eine Aufnahme des anderen Wellenabschnitts zentrierend ein (Anspruch 7).

Eine besonders drehfeste Verbindung wird durch die Bildung eines Vielkants zwischen dem Zapfen und dem Abschnitt erreicht (Anspruch 8). Eine drehfeste Verbindung zwischen beiden Wellenabschnitten wird auch dadurch erreicht, wenn diese Teile miteinander verpreßt, verklebt, verschraubt oder sonstwie miteinander drehfest verbunden sind. Eine Schraubverbindung hätte sogar noch den Vorteil, daß die Abtriebswelle zum Zweck eines Austauschs auch nachträglich vom Deckel demontiert werden kann.

Ein Ausführungsbeispiel der Erfindung ist in der Zeichnung dargestellt und wird im folgenden näher erläutert. Es zeigen:
- Fig. 1: Längsschnitt durch einen Arbeitsbehälter mit eingesetztem Arbeitswerkzeug und aufgesetztem Deckel nach der Erfindung,
- Fig. 2: perspektivische Ansicht auf den erfindungsgemäßen Deckel gemäß Fig. 1 von unten her, allerdings in verkleinertem Maßstab,
- Fig. 3: oberer Wellenabschnitt der Abtriebswelle gemäß Fig. 1,
- Fig. 4: unterer Wellenabschnitt der Abtriebswelle gemäß den Figuren 1 und 2 und
- Fig. 5: Ansicht in Richtung X auf das erste Kupplungselement des unteren Wellenabschnitts nach Fig. 4.

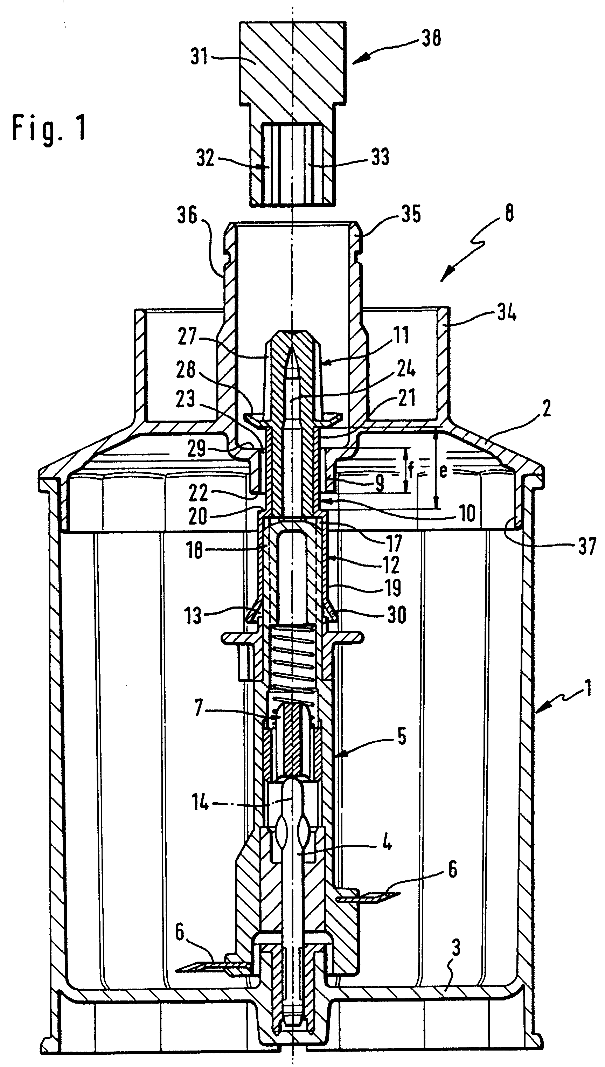

In Fig. 1 ist ein Arbeitsbehälter 1 eines Zerkleinerungsgerätes 8 dargestellt, der von einem Deckel 2 verschlossen ist. Vom Boden 3 des Arbeitsbehälters 1 erstreckt sich nach oben ein als Führungszapfen ausgebildeter, aus nichtrostendem Stahl hergestellter Lagerzapfen 4 oder sonstige Zentriereinrichtung, an dem ein Arbeitswerkzeug 5 mit Messern 6 drehbar gelagert ist, wenn der Deckel 2 ordnungsgemäß den Arbeitsbehälter 1 verschließt, wie dies in Fig. 1 dargestellt ist. In dem Arbeitswerkzeug 5 ist eine Bremse 7 ausgebildet, die dafür sorgt, daß, sobald der Deckel 2 vom Arbeitsbehälter 1 nach oben abgenommen wird, das Arbeitswerkzeug 5 zum Stillstand gelangt. Wie eine derartige Bremse im Betrieb funktioniert, ist in der deutschen Patentanmeldung 41 28 456.9 näher beschrieben, so daß an dieser Stelle hierauf nicht mehr näher eingegangen wird. Ebenso ist auch die generelle Anordnung aus dieser älteren Patentanmeldung bekannt und kann ebenso wie die Arbeitsweise der Bremse auf das in Fig. 1 dargestellte Zerkleinerungsgerät 8 gelesen werden.

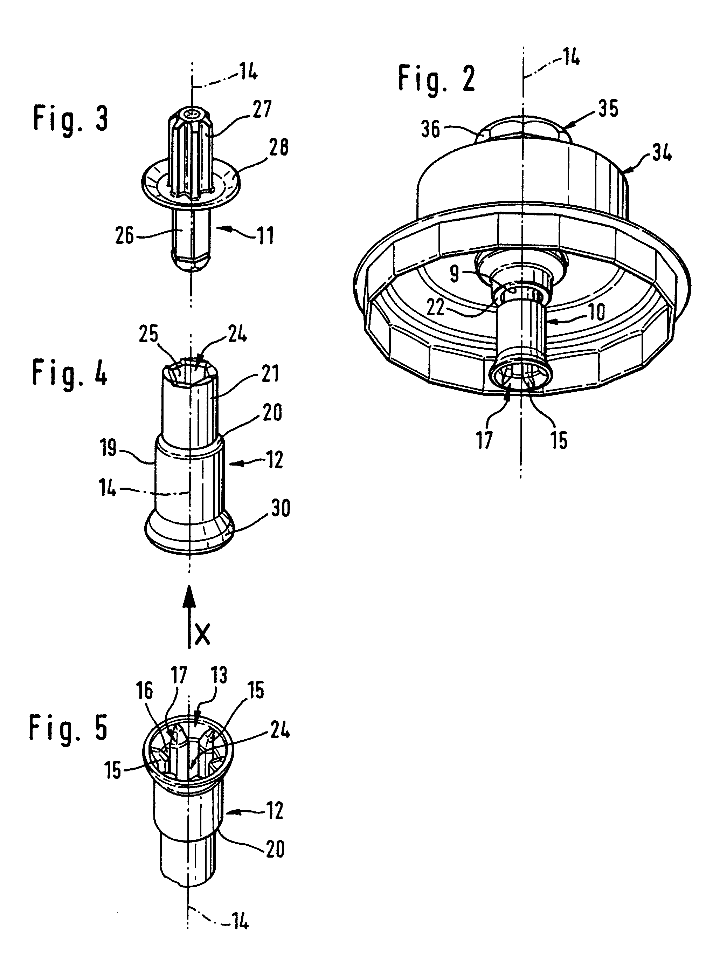

Wie aus den Figuren 1 und 2 ersichtlich ist, weist der Deckel 2 eine mittige Bohrung 9 auf, die von einer Abtriebswelle 10 durchdrungen ist. Die Abtriebswelle 10 besteht aus einem oberen Wellenabschnitt 11 und einem unteren Wellenabschnitt 12. Der untere Wellenabschnitt 12, wie er auch in den Figuren 4 und 5 dargestellt ist, weist eine glockenförmige Ausnehmung 13 auf, in der parallel zur Längsachse 14 des Arbeitswerkzeugs verlaufende Rippen 15 ausgebildet sind, die Nuten 16 einschließen. Die Längsachse 14 ist auch gleichzeitig die Längsachse des Zerkleinerungsgerätes 8 und der Antriebseinrichtung 38 nach Fig. 1, wenn die Antriebseinrichtung 38 auf dem Deckel 2 zentriert ist. Die Rippen 15 bilden mit den Nuten 16 eine Längsverzahnung 17, die mit einer am freien Ende des Arbeitswerkzeugs 5 ausgebildeten Längsverzahnung 18 (gestrichelt dargestellt) kuppelbar ist.

Die Längsverzahnung 18 des Arbeitswerkzeugs 5 bildet das erste Kupplungselement, während die Längsverzahnung 17 am unteren Wellenabschnitt 12 das zweite Kupplungselement der Abtriebswelle 10 bildet. Etwa in der Mitte am Außenumfang 19 des unteren Wellenabschnitts 12 ist eine sich im Durchmesser verjüngende Stufe 20 ausgebildet, an die sich nach Fig. 4 nach oben ein Abschnitt kleineren Durchmessers 21 anschließt. Der Durchmesser des Außenumfangs 19 ist größer als der Durchmesser der Bohrung 9, damit die Stufe 20 von außen her an der Stirnfläche 22 der Bohrung 9 anschlagen kann, wenn die Abtriebswelle 10 nach oben gegen den Deckel 2 verschoben wird (Fig. 2). Der Durchmesser des Abschnitts 21 ist um einige Millimeter kleiner als der Durchmesser der Bohrung 9, damit zwischen diesen beiden Abschnitten 9, 21 ein Spalt 23, vorzugsweise bei rund laufenden Teilen ein Ringspalt 23 entsteht, wenn die Abtriebswelle 10 die in Fig. 1 dargestellte Stellung einnimmt.

Nach den Figuren 1, 4 und 5 wird der untere Wellenabschnitt 12 von einer Längsbohrung 24 durchdrungen, an deren nach oben offenen Ende ein Mehrkant 25, vorzugsweise ein Sechskant, ausgebildet ist.

Nach Fig. 3 besteht der obere Wellenabschnitt aus einem am unteren Ende angeformten Mehrkantstopfen 26 und einer am oberen Ende angebrachten Verzahnung 27. Die Verzahnung 27, die das dritte Kupplungselement bildet, ist von dem Mehrkantstopfen 26 durch einen tellerförmigen Absatz 28 getrennt, der zum Abhalten von Nahrungsmitteln oder sonstigen Flüssigkeiten nach oben in Richtung Antriebseinrichtung 38 gewölbt ist. Der Mehrkantstopfen 26 wird nach den Figuren 3 und 4 in die Längsbohrung 24 des unteren Wellenabschnitts 12 eingesteckt, der somit drehfest mit dem oberen Wellenabschnitt 11 verbunden ist. Zur axialen Sicherung der beiden Wellenabschnitte 11, 12 ist der Mehrkantstopfen 26 in die Längsbohrung 24 eingepreßt. Es besteht aber auch die Möglichkeit, diese beiden Teile miteinander zu verkleben, verklipsen, verschrauben oder sonst mit ähnlichen Verbindungsmitteln zu verbinden. Die Verbindung des oberen und unteren Wellenabschnitts 11, 12 erfolgt allerdings erst dann, wenn der obere Wellenabschnitt 11 gemäß Fig. 1 von oben her und der untere Wellenabschnitt 12 von unten her in die Bohrung 9 des Deckels 2 eingesteckt wurde, damit beide Teile die Abtriebswelle 10 als ein Bauteil bilden. Da der äußere Durchmesser des Absatzes 28 bzw. der Stufe 20 größer ist als der Durchmesser der Bohrung 9 am Deckel 2, schlagen diese Teile an ihrer zugewandten Stirnfläche 29 bzw. 22 an, so daß die Abtriebswelle 10 nicht aus der Bohrung 9 entgleiten kann und somit fest mit dem Deckel 2 verbunden ist.

Da der kürzeste Abstand e zwischen der Unterseite des Absatzes 28 und der Stufe 20 größer ist als der kürzeste Abstand f zwischen den Stirnflächen 29 und 22, kann sich die Abtriebswelle 10 um die Differenz dieser beiden Maße (e minus f) axial in der Bohrung 9 verschieben und auch soweit schrägstellen, bis der obere bzw. untere Bereich des Abschnitts 21 der Abtriebswelle 10 an den entgegengesetzten Enden der Bohrung 9 anschlägt. Damit bei der maximalen Schrägstellung der Abtriebswelle 10 die Längsverzahnung 17 immer auf die Längsverzahnung 18 des Arbeitswerkzeugs 5 aufgesetzt bzw. in diese ohne Eingriff von Hand eingefädelt werden kann, ist gemäß Figuren 1 und 4 am unteren Ende des unteren Wellenabschnitts 12 eine Erweiterung 30 vorgesehen.

Oberhalb des Zerkleinerungsgerätes 8 ist die Antriebswelle 31 einer von einem Motor (nicht dargestellt) angetriebenen Antriebseinrichtung 38, insbesondere von Hand geführter Handrührer oder Stabmixer, ausgebildet, die eine in einer hülsenförmigen Ausnehmung 32 ausgebildete Verzahnung 33 aufweist, die das vierte Kupplungselement bildet.

Beim Aufsetzen der Antriebseinrichtung 38 gelangt das vierte Kupplungselement 33 in drehfesten Eingriff mit dem dritten Kupplungselement 27 der Abtriebswelle 10. Dabei stützt sich die Antriebseinrichtung 38 an den an der Oberseite des Deckels 2 ausgebildeten rohrförmigen Aufnahmen 34, 35 ab, wobei die Aufnahme 35 mit einem Mehrkant 36 an seiner Außenfläche versehen ist, die in drehfestem Eingriff mit der Antriebseinrichtung 38 gelangt, um so die Drehung ausschließlich nur auf die Antriebswelle 31 zu übertragen.

Wird die Antriebseinrichtung 38 eingeschaltet, so wird die Drehbewegung der Antriebswelle 31 auf die Abtriebswelle 10 und somit über das erste und zweite Kupplungselement 17, 18 übertragen. Im Arbeitsbehälter 1 befindliche Nahrungsmittel werden durch die am Arbeitswerkzeug 5 sichelförmig und diametral zueinander verlaufenden Messer 6 zerkleinert.

Nahrungsmittel, die von unten oder von oben her in die Bohrung 9 gelangen, können nach Abnehmen des Deckels 2 aus der Bohrung 9 herausgespült werden. Dadurch, daß im Betriebszustand der Deckel 2 über seinen Rand 37 im Arbeitsbehälter 1 zentriert ist und gleichzeitig der Lagerzapfen 4 und somit das Arbeitswerkzeug 5 konzentrisch zum Arbeitsbehälter 1 verlaufen, verläuft auch die sich über das Arbeitswerkzeug 5 zentrierende Abtriebswelle 10 im wesentlichen konzentrisch zur Bohrung 9, so daß diese mit der Außenwandung des Abschnitts 21 einen Ringspalt 23 bildet und somit im Betrieb nicht an der Wandung der Bohrung 9 anschlägt, was Geräusche und Verschleiß vermeidet. Dies gilt auch dann, wenn die Antriebswelle 31 auf der Abtriebswelle 10 gekuppelt ist, da sich die Antriebseinrichtung 38 ebenfalls in den Aufnahmen 35 und 36 zentriert, die konzentrisch zum Deckel 2 verlaufen.

## Patentansprüche

1. Arbeitsbehälter (1) mit einem diesen verschließenden Deckel (2), an dessen Boden (3) an einer Führungseinrichtung (4) ein zum Bearbeiten von Nahrungsmitteln drehbares Arbeitswerkzeug (5) ausgebildet ist, das an seinem dem Deckel (2) näheren Bereich ein erstes Kupplungselement (18) aufweist, das beim Verschließen des Arbeitsbehälters (1) durch den Deckel (2) mit einem zweiten Kupplungselement (17) einer Abtriebswelle (10) kuppelbar ist, die von einer Antriebseinrichtung (38) antreibbar ist, und die über eine im Deckel (2) ausgebildete Bohrung (9) diesen nach oben durchdringt,
**dadurch gekennzeichnet**,
daß zwischen dem Außendurchmesser des die Bohrung (9) durchdringenden Abschnitts (21) der Abtriebswelle (10) und der Bohrung (9) ein Spalt (23) ausgebildet ist, und daß der Spalt (23) so groß gewählt wird, daß bei Reinigung des Deckels (2) mit Wasser Nahrungsmittelrückstände aus dem Spalt (23) abfließen können.

2. Arbeitsbehälter nach Anspruch 1,
**dadurch gekennzeichnet**,
daß beim Aufsetzen des Deckels (2) auf den Arbeitsbehälter (1) das zweite Kupplungselement (17) in das erste Kupplungselement (18) derart eingreift, daß die Abtriebswelle (10) im wesentlichen konzentrisch zum Deckel (2) verläuft.

3. Arbeitsbehälter nach Anspruch 2,
**dadurch gekennzeichnet**,
daß der Spalt (23) bei aufgesetztem Deckel (2) von einem Ringspalt gebildet wird.

4. Arbeitsbehälter nach Anspruch 1,
**dadurch gekennzeichnet**,
daß die Abtriebswelle (10) den Deckel (2) über eine Bohrung (9) nach außen durchdringt und an seinem äußeren freien Ende ein drittes Kupplungselement (27) aufweist, das mit einem vierten Kupplungselement (33) einer Antriebswelle (31) der elektrisch betriebenen Antriebseinrichtung, insbesondere Handrührer oder Stabmixer, kuppelbar ist.

5. Arbeitsbehälter nach Anspruch 4,
**dadurch gekennzeichnet**,
daß sich an den die Bohrung (9) des Deckels (2) durchdringenden Abschnitt (21) der Abtriebswelle (10) zu beiden Seiten ein Absatz (20, 28) anschließt, dessen radiale Erstreckung größer ist als der Durchmesser der Bohrung (9).

6. Arbeitsbehälter nach Anspruch 5,
**dadurch gekennzeichnet**,
daß die Abtriebswelle (10) aus einem ersten und einem zweiten Wellenabschnitt (11, 12) zusammengesetzt ist, an denen jeweils nur ein Absatz (28 bzw. 20) ausgebildet ist.

7. Arbeitsbehälter nach Anspruch 6,
**dadurch gekennzeichnet**,
daß der eine Wellenabschnitt (12) eine Längsbohrung (24) zur drehfesten Aufnahme eines am anderen Wellenabschnitt (11) ausgebildeten Stopfens (26) aufweist.

8. Arbeitsbehälter nach Anspruch 7,
**dadurch gekennzeichnet**,
daß die Längsbohrung (24) und der Stopfen (26) der beiden Wellenabschnitte (12, 11) von einem Vielkant gebildet sind.

9. Arbeitsbehälter nach Anspruch 7 oder 8,
**dadurch gekennzeichnet**,
daß die Verbindung zwischen Stopfen (26) und Längsbohrung (24) von einer Preßpassung gebildet ist.

10. Arbeitsbehälter nach Anspruch 5,
**dadurch gekennzeichnet**,
daß der kürzeste Abstand (e) zwischen den beiden Absätzen (20, 28) nennenswert größer ist als die Länge (f) der Bohrung (9).

## Claims

1. A processing container (1) having a lid (2) for closing it and a base (3) on which a guide device (4) is provided for receiving a rotary processing tool (5) for processing food materials, said processing tool having in its area close to the lid (2) a first coupling member (18) adapted to be coupled to a second coupling member (17) of a driven shaft (10) when the processing container (1) is closed by the lid (2), said driven shaft being adapted to be driven by a drive mechanism (38) and extending upwardly through a bore (9) formed in the lid (2),
**characterized in that** a clearance space (23) is formed between the outer diameter of the section (21) of the driven shaft (10) extending through the bore (9) and the bore (9), and that the dimension of the clearance space (23) is selected so that food residues can be flushed out of the clearance space (23) during cleaning of the lid (2) with water.

2. The processing container as claimed in claim 1, **characterized in that** seating of the lid (2) down onto the processing container (1) causes interfitting engagement of the second coupling member (17) with the first coupling member (18), such that the driven shaft (10) extends essentially concentrically with the lid (2).

3. The processing container as claimed in claim 2, **characterized in that** the clearance space (23) is formed by an annular space with the lid (2) seated in place.

4. The processing container as claimed in claim 1, **characterized in that** the driven shaft (10) extends outwardly through a bore (9) in the lid (2) and has at its outer free end a third coupling member (27) adapted to be coupled to a fourth coupling member (33) of a drive shaft (31) of the electrically powered drive mechanism, in particular hand-held mixer or immersion blender.

5. The processing container as claimed in claim 4, **characterized in that** a step (20, 28) adjoins either end of the section (21) of the driven shaft (10) passing through the bore (9) in the lid (2), the radial dimensions of said step being greater than the diameter of the bore (9).

6. The processing container as claimed in claim 5, **characterized in that** the driven shaft (10) is composed of a first and a second shaft section (11, 12) having each one step only (28 and 20, respectively).

7. The processing container as claimed in claim 6, **characterized in that** the one shaft section (12) includes a longitudinal bore (24) for receiving therein a pin (26) formed on the other shaft section (11) in a manner preventing relative rotation.

8. The processing container as claimed in claim 7, **characterized in that** the longitudinal bore (24) and the pin (26) of the shaft sections (12 and 11, respectively) are formed by a polygon.

9. The processing container as claimed in claim 7 or 8,
**characterized in that** the connection between the pin (26) and the longitudinal bore (24) is formed by a press fit.

10. The processing container as claimed in claim 5, **characterized in that** the shortest distance (e) between the two steps (20, 28) is appreciably larger than the length (f) of the bore (9).

## Revendications

1. Récipient de travail (1) comprenant un couvercle (2) refermant celui-ci, sur le fond (3) duquel un outil de travail (5) rotatif destiné au traitement d'aliments est réalisé sur un dispositif de guidage (4), ledit outil de travail présentant dans sa région proche du couvercle (2) un premier élément d'accouplement (18) qui, lorsqu'on ferme le récipient de travail (1) au moyen du couvercle (2), est susceptible d'être accouplé à un deuxième élément d'accouplement (17) d'un arbre mené (10) qui est susceptible d'être entraîné par un dispositif d'entraînement (38) et qui traverse le couvercle (2) vers le haut via un perçage (9) réalisé dans celui-ci, caractérisé en ce qu'une fente (23) est réalisée entre le diamètre extérieur du tronçon (21) de l'arbre mené (10) traversant le perçage (9) et le perçage (9), et en ce que la fente (23) est choisie de taille telle que lorsqu'on nettoie le couvercle (2) avec de l'eau, des restes d'aliments peuvent s'écouler hors de la fente.

2. Récipient de travail selon la revendication 1, caractérisé en ce que lorsqu'on met en place le couvercle (2) sur le récipient de travail (1), le deuxième élément d'accouplement (17) s'engage de telle sorte dans le premier élément d'accouplement (18) que l'arbre mené (10) s'étend de manière sensiblement concentrique par rapport au couvercle (2).

3. Récipient de travail selon la revendication 2, caractérisé en ce que la fente (23) est formée par une fente annulaire lorsque le couvercle (2) est mis en place.

4. Récipient de travail selon la revendication 1, caractérisé en ce que l'arbre mené (10) traverse vers l'extérieur le couvercle (2) via un perçage (9) et présente à son extrémité libre extérieure un troisième élément d'accouplement (27) qui est susceptible d'être accouplé à un quatrième élément d'accouplement (33) d'un arbre moteur (31) du dispositif d'entraînement électrique, en particulier d'un batteur à main ou d'un mixer plongeant.

5. Récipient de travail selon la revendication 4, caractérisé en ce que chaque côté du tronçon (21) de l'arbre mené (10), traversant le perçage (9) du couvercle (2), se raccorde un talon (20, 28) dont l'extension radiale est supérieure au diamètre du perçage (9).

6. Récipient de travail selon la revendication 5, caractérisé en ce que l'arbre mené (10) est composé par un premier et par un deuxième tronçon d'arbre (11, 12) sur lequel n'est réalisé qu'un seul talon (28, 20) respectif.

7. Récipient de travail selon la revendication 6, caractérisé en ce que ledit un tronçon d'arbre (12) présente un perçage longitudinal (24) pour recevoir de manière solidaire en rotation un bouchon (26) réalisé sur l'autre tronçon d'arbre (11).

8. Récipient de travail selon la revendication 7, caractérisé en ce que le perçage longitudinal (24) et le bouchon (26) des deux tronçons d'arbre (12, 11) sont formés par un polygone.

9. Récipient de travail selon l'une ou l'autre des revendications 7et 8, caractérisé en ce que la liaison entre le bouchon (26) et le perçage longitudinal (24) est formé par un ajustage par pressage.

10. Récipient de travail selon la revendication 5, caractérisé en ce que l'écartement (3) le plus court entre les deux talons (20, 28) est notablement supérieur à la longueur (f) du perçage (9).
